# EUROPEAN PATENT SPECIFICATION

(11) **EP 3 517 582 B1**
(45) Date of publication and mention of the grant of the patent: **07.12.2022**
(21) Application number: 18154101.2
(22) Date of filing: 30.01.2018
(51) Int. Cl.: C09D 11/06, C09D 11/101, C09D 11/34, C09D 11/40

(54) **RADIATION-CURABLE INKJET INK COMPOSITION**
STRAHLUNGSHÄRTBARE TINTENSTRAHLTINTENZUSAMMENSETZUNG
COMPOSITION D'ENCRE POUR JET D'ENCRE DURCISSABLE PAR RAYONNEMENT

(43) Date of publication of application: 31.07.2019
(73) Proprietor: Canon Production Printing Holding B.V., 5914 HH Venlo (NL)
(72) Inventor: SCHAINK, Hermanus M., 5914 CA Venlo (NL); SUILEN, Frederik L.E.M., 5914 CA Venlo (NL); VAN DER LOOP, Gerardus C.W., 5914 CA Venlo (NL); WILLEMSE, Robin X.E., 5914 CA Venlo (NL)
(74) Representative: Canon Production Printing IP Department

(56) References cited:
- EP-A1- 2 554 610
- EP-A1- 3 006 518
- EP-A1- 3 115 425
- EP-A1- 3 130 475

## Description

The present invention relates to an ink composition and to an ink set comprising such ink composition. The present invention further relates to a method for preparing an ink composition. In addition, the present invention relates to a method for applying an image onto a recording medium.

### Background of the invention

Radiation-curable inkjet ink compositions are known in the art. These ink compositions comprise one or more radiation curable components. A special class of radiation curable inkjet ink compositions are phase change radiation curable inkjet ink compositions. These inks are fluid at elevated temperature and become (*semi*-) solid - even if not yet cured- at lower temperatures. These inks are typically jetted at elevated temperatures. Phase change inks may become solid or *semi*-solid upon cooling down on a recording medium, e.g. a sheet of paper. As a result, spread of a droplet of ink on the recording medium may be decreased and color bleeding may be prevented. An example of a phase change radiation curable inkjet ink is a gelling radiation curable inkjet ink. Gelling radiation curable inkjet ink compositions typically comprise a gellant. Gellants are also known in the art as gelling agents or thickeners. Examples of gellants used in gelling radiation curable inkjet ink compositions are waxes, such as natural waxes and long chain carboxylic acids, and ketones. The presence of a gellant can cause a viscosity increase in the inkjet ink composition upon cooling of the ink composition. The viscosity increase in the ink composition should be sufficient, to adequately control droplet spreading.

EP 3115425 describes a photocurable inkjet ink comprising a gellant.

EP 3006518 also describes a photocurable inkjet ink comprising a gellant.

EP 2554610 describes an inkjet ink comprising an unsaturated fatty acid ester.

EP 3130475 describes a photocurable inkjet ink comprising a gellant.

A disadvantage of gellants is that images printed using an ink composition comprising such gellant generally show low or medium gloss level, while high gloss is desired for images printed using a radiation curable ink. There is a need for gelling radiation curable ink compositions that provide high gloss images.

It is therefore an object of the present invention to provide a gelling radiation curable ink composition that provides high gloss images.

### Summary of the invention

The object of the invention is achieved in a radiation-curable inkjet ink composition comprising a gellant, wherein the gellant comprises:
- a fatty acid ester; and
- a fatty acid and/or a fatty alcohol.

### Radiation-curable medium

The radiation curable inkjet ink composition may comprise a radiation-curable medium. The radiation-curable medium may comprise at least one radiation-curable component. A radiation-curable component is a component that may react (e.g. polymerize) under influence of suitable radiation, such as electromagnetic radiation, e.g. ultraviolet (UV) radiation. Examples of radiation-curable components are epoxides and (meth)acrylates. (Meth-)acrylates may comprise one or more reactive groups for forming an acrylate polymer. The radiation-curable medium may comprise one type of radiation curable compound or alternatively, the radiation-curable medium may comprise a mixture of radiation-curable compounds.

The radiation-curable medium may further comprise at least one inhibitor. An inhibitor is a component that prevents (inhibits) unwanted polymerization of the radiation-curable compound. Inhibitors may be added to the radiation curable inkjet ink composition to increase the shelf life of the ink composition.

The radiation-curable medium may further comprise at least one photo initiator. A photo initiator is a component that improves the efficiency of curing; i.e. increases the polymerization rate when the ink composition is irradiated with suitable radiation, such as UV radiation.

The radiation-curable medium may further comprise a solvent, such as water or an organic solvent. The solvent may be added to the radiation curable medium to tune ink properties, such as viscosity.

Further, additional components may be added to the radiation curable medium. For example, the radiation curable medium may comprise surfactants, antibacterial components and anti-fungi components.

### Colorant

The radiation curable inkjet ink composition may further comprise a colorant, such as a pigment, a dye or a mixture thereof. Further, the radiation curable inkjet ink composition may comprise a mixture of dyes and/or a mixture of pigments. The colorant may provide the ink composition with a predetermined color.

### Gellant

The radiation-curable inkjet ink composition may further comprise a gellant. According to the present invention the gellant comprises a fatty acid ester and the gellant may further comprise a fatty acid and/or a fatty alcohol, wherein the fatty acid ester is an ester obtainable by a condensation reaction between a fatty acid ester and a component selected from the group consisting of pentaerythritol, cyclodextrine, dipentaerythritol, 2-(hydroxymethyl)-2-methylpropane-1,3-diol, 2-ethyl-2-(hydroxymethyl)propane-1,3-diol, 2-(hydroxymethyl)propane-1,3-diol, trimethylolethane, trimethylolpropane, trimethylolbutane and trimethylolpentane.

These compounds are compounds comprising at least 3 hydroxyl functional groups. When reacted with an acid, ester compounds can be formed.

Preferably, the gellant comprises a fatty alcohol.

The ester compound formed by reacting the first reactant and the second reactant may be a nonlinear ester compound. The ester compound may comprise at least three ester groups. The ester compound may provide the radiation curable inkjet ink composition with gelling properties.

Esters obtainable by reacting a fatty acid with a compound A selected from the above listed group may be esters having a branched structure (i.e. non-linear esters). Without wanting to be bound to any theory, it is believed that a branched structure may decrease the tendency of the ester compound to crystallize when cooling down. Methods for synthesizing ester compounds starting from a compound comprising a plurality of hydroxyl functional groups and a compound comprising a carboxylic acid group are known in the art.

Fatty acids are compounds comprising a carboxylic acid group and a long aliphatic chain, which is either saturated or unsaturated. Most naturally occurring fatty acids have an unbranched chain of an even number of carbon atoms. However, fatty acids having a branched chain and/or an odd number of carbon atoms may also be used as gellant in accordance with the present invention. Examples of fatty acids are octanoic acid, decanoic acid, dodecanoic acid, tetradecanoic acid, hexadecanoic acid (palmitic acid), octadecanoic acid (stearic acid), eicosanoic acid (arachidic acid) and dodecanoic acid. Fatty alcohols are compounds comprising a hydroxyl group (OH) bonded to a long aliphatic chain. Most naturally occurring fatty alcohols have an unbranched chain of an even number of carbon atoms. However, fatty alcohols having a branched chain and/or an odd number of carbon atoms may also be used as gellant in accordance with the present invention. Examples of fatty alcohols are 1-hexanol, 1-heptanol, 1-octanol, 1-nonanol, 1-decanol, 1-undecanol, 1-dodecanol, 1-tridecanol, 1-tetradecanol, 1-pentadecanol, 1-hexadecanol, 1-heptadecanol, 1-octadecanol, 1-nonadecanol, 1-eicosanol, docosanol.

It was surprisingly found that the combination of a fatty acid ester with a fatty acid and/or fatty alcohol provide superior properties when applied as a gellant in a radiation-curable inkjet ink composition. It was found that radiation-curable inks comprising a fatty acid ester in addition to a fatty acid and/or fatty alcohol may form high gloss images when used in an inkjet printing process.

In an embodiment, the gellant is present in an amount of 0.2 wt% - 6.0 wt% based on the total weight of the radiation-curable inkjet ink composition. For example, the gellant may be present in an amount of 0.5 wt% - 4.0 wt% based on the total weight of the radiation-curable inkjet ink composition, such as from 1.0 wt% - 3.0 wt% based on the total weight of the radiation-curable inkjet ink composition.

It was surprisingly found that a small amount of the gellant in accordance with the present invention may suffice to efficiently increase the viscosity of the radiation curable inkjet ink composition in between jetting of a droplet onto a recording medium and curing of the ink by irradiation.

Gellants may form three dimensional structures below a gelling temperature. Hence, when the inkjet ink composition is gelled, a three dimensional structure of the gellant may be present in the inkjet ink composition. Such three dimensional structure may comprise crystals. The presence of crystals may decrease the gloss level of a print made using the inkjet ink composition. Therefore, decrease of the gloss level may be prevented by using only small amounts of gellant, for example 0.2 wt% - 3.0 wt% based on the total weight of the radiation-curable inkjet ink composition.

In a further embodiment, the ester compound is a fatty acid ester of pentaerythritol. Fatty acids are suitable for forming esters, when reacted with a compound comprising a hydroxyl functional group. The fatty acids may be saturated or non-saturated fatty acids.

Non-saturated fatty acids may be monounsaturated fatty acids or polyunsaturated fatty acids. Non-saturated fatty acids comprise an alkene functional group. Upon curing of the ink, the alkene functional group may react and the ester compound may be incorporated in the network formed by the radiation-curable component. Preferably, the fatty acid is a saturated fatty acid.

When the compound B is a fatty acid, no so-called blooming of the ink may occur. Blooming is an unwanted phenomenon that may occur in ink composition, such as radiation-curable ink composition comprising a gelling agent. After being applied onto a recording medium, a gelling agent present in the ink may cool down and may solidify, thereby forming a three-dimensional network that increases the viscosity of the ink. However, in the course of time, the gelling agent may migrate to the surface of the ink layer, which may result in matt print appearance. The phenomenon of decreased gloss due to migration of the gelling agent is known as "blooming". Without wanting to be bound to any theory, it is believed that by selecting compound B to be a fatty acid, an amorphous ester compound is obtained, that results in an ink composition that does not show blooming. Fatty acid esters of pentaerythritol may be suitably used as a gellant in a radiation-curable ink.

In a further embodiment, the ester compound is pentaerythritoltetrastearate. Pentaerythritoltetrastearate is an ester obtainable by reacting pentaerythritol and stearic acid. Stearic acid (CH₃(CH₂)₁₆COOH) is a fatty acid.

In an embodiment, the fatty acid and/or fatty alcohol comprise an alkyl group having 5-30 carbon atoms.

The alkyl group may comprise 5-30 carbon atoms, preferably 10-25. When the functional group R comprises less than 5 carbon atoms, the fatty acid or the fatty alcohol may not show gelling behavior at printing conditions. When the functional group R comprises more than 30 carbon atoms, then the fatty acid or fatty alcohol may not be fluid at jetting conditions, which may hamper the jetting of the inkjet ink composition. The properties of the fatty acid and fatty alcohol may be influenced by the choice of the particular compound. The nature of the alkyl group may for example influence the melting point of the fatty acid and fatty alcohol compound.

In an embodiment, the radiation curable component is an acrylate having two or more acrylate functional groups. An acrylate may undergo a polymerization reaction when irradiated by suitable radiation, such as UV radiation. Hence, a polyacrylate polymer may be formed when an inkjet ink composition comprising an acrylate is cured, thereby hardening the ink. An acrylate molecule having two or more acrylate functional groups may react with two or more other acrylate molecules and hence, a polymeric network may be formed. Examples of acrylates having two or more acrylate functional groups are known in the art.

In a further embodiment, the ink composition further comprises a monofunctional acrylate. Presence of a monofunctional acrylate may improve the hardness and flexibility of the ink layer after curing.

In an embodiment, an ink set is provided, wherein the ink set comprises a radiation-curable inkjet ink composition according to the present invention.

An ink set may comprise a plurality of different inks. For example, the ink set may be a CMYK ink set, comprising a Yellow, a Magenta, a Cyan and a blacK ink composition. At least one of the ink compositions in the ink set may be an ink comprising a gellant, wherein the gellant comprises a fatty acid ester and wherein the gellant further comprises a fatty acid and/or fatty alcohol. Preferably, a plurality of the ink compositions in the ink set may comprise a gellant, wherein the gellant comprises a fatty acid ester and wherein the gellant further comprises a fatty acid and/or fatty alcohol. The ink set may further comprise additional colors, such as white, red, green, light magenta, light cyan and/or grey. Further, the ink set may comprise one or more metallic ink compositions. Optionally, the ink set may comprise an undercoat and/or an overcoat composition.

An ink set, wherein at least one of the inkjet ink compositions comprises a gellant comprises a fatty acid ester in addition to a fatty acid and/or a fatty alcohol may allow printing images having good image quality and high gloss.

In an aspect of the invention, use of
- a fatty acid ester, the fatty acid ester being an ester obtainable by a condensation reaction between a fatty acid ester and a component selected from the group consisting of pentaerythritol, cyclodextrine, dipentaerythritol, 2-(hydroxymethyl)-2-methylpropane-1,3-diol, 2-ethyl-2-(hydroxymethyl)propane-1,3-diol, 2-(hydroxymethyl)propane-1,3-diol, trimethylolethane, trimethylolpropane, trimethylolbutane and trimethylolpentane; and
- a fatty acid and/or fatty alcohol,
in a radiation-curable inkjet ink composition is provided. The ester compound and the fatty acid and/or fatty alcohol together may be suitably used in such ink composition as a gellant.

In an aspect of the invention, a method for preparing a radiation-curable inkjet ink composition is provided, the method comprising the steps of:
- providing a radiation curable component;
- providing gellant, wherein the gellant comprises
   i. a fatty acid ester, the fatty acid ester being an ester obtainable by a condensation reaction between a fatty acid ester and a component selected from the group consisting of pentaerythritol, cyclodextrine, dipentaerythritol, 2-(hydroxymethyl)-2-methylpropane-1,3-diol, 2-ethyl-2-(hydroxymethyl)propane-1,3-diol, 2-(hydroxymethyl)propane-1,3-diol, trimethylolethane, trimethylolpropane, trimethylolbutane and trimethylolpentane; and
   ii. a fatty acid and/or a fatty alcohol; and
- mixing the radiation curable component and the gellant.

The radiation-curable component and the gellant may be provided. Optionally, additional components may be provided, for example an additional solvent. The radiation-curable component and the gellant may be provided neat or they may be provided in a solution or dispersion. Optionally, a colorant may be provided. In case the colorant is a pigment, the pigment is preferably provided as a dispersion, such as an aqueous pigment dispersion. The components may be provided at once, or the components may be added subsequently. The components may be added in any suitable order. In case a dispersible component is added (e.g. a pigment), such dispersible component may be preferably added after the other components of the ink composition are provided. Mixing of the components may be carried out at any suitable temperature, for example room temperature.

In an aspect of the invention, a method for applying an image onto a recording medium is provided, the method comprising the steps of:
**a.** jetting droplets of a radiation-curable inkjet ink composition according to the present invention onto the recording medium;
**b.** curing the radiation-curable inkjet ink composition by irradiating the ink composition using UV radiation.

In the method, an image is applied onto a recording medium. In the method, in step a), an image is applied to the recording medium. The image may be applied using an ink composition according to the present invention. The ink composition may be applied onto the recording medium in a predetermined fashion, e.g. in accordance with image files stored on suitable storing means. The image may be applied for example by jetting droplets of the radiation-curable inkjet ink composition using an inkjet print head. The recording medium may be a sheet-like medium, such as a sheet of paper or a sheet of vinyl. Alternatively, the recording medium may be a web, for example an endless belt. The web may be made of a suitable material. Optionally, the image may be dried after it has been applied onto the intermediate transfer member.

In the method, in step b), the radiation-curable inkjet ink composition is cured by irradiating the ink composition using UV radiation. The inkjet ink composition may be irradiated using a suitable source of radiation, such as a halogen lamp, a mercury lamp and/or a LED lamp. Optionally, a plurality of sources of radiation may be used to irradiate the inkjet ink composition.

### Brief description of the drawings

These and further features and advantages of the present invention are explained hereinafter with reference to the accompanying drawings showing non-limiting embodiments and wherein:

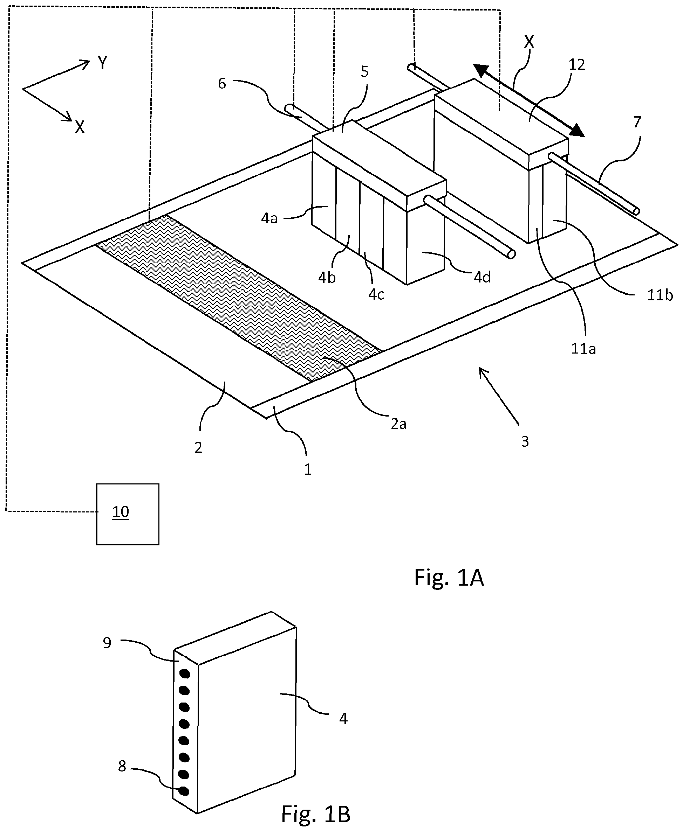

- Fig. 1A: shows a schematic representation of an inkjet printing system.
- Fig. 1B: shows a schematic representation of an inkjet print head.

In the drawings, same reference numerals refer to same elements.

### Detailed description of the drawings

Fig. 1A shows an ink jet printing assembly 3. The ink jet printing assembly 3 comprises supporting means for supporting an image receiving medium 2. The supporting means are shown in Fig. 1A as a flat surface 1, but alternatively, the supporting means may be a platen, for example a rotatable drum that is rotatable around an axis. The supporting means may be optionally provided with suction holes for holding the image receiving medium in a fixed position with respect to the supporting means. The ink jet printing assembly 3 comprises print heads 4a - 4d, mounted on a scanning print carriage 5. The scanning print carriage 5 is guided by suitable guiding means 6 to move in reciprocation in the main scanning direction X. Each print head 4a - 4d comprises an orifice surface 9, which orifice surface 9 is provided with at least one orifice 8, as is shown in Fig. 1B. The print heads 4a - 4d are configured to eject droplets of marking material onto the image receiving medium 2.

The image receiving medium 2 may be a medium in web or in sheet form and may be composed of e.g. paper, cardboard, label stock, coated paper, plastic or textile. Alternatively, the image receiving medium 2 may also be an intermediate member, endless or not. Examples of endless members, which may be moved cyclically, are a belt or a drum. The image receiving medium 2 is moved in the sub-scanning direction Y over the flat surface 1 along four print heads 4a - 4d provided with a fluid marking material.

The image receiving medium 2, as depicted in Fig. 1A is locally heated or cooled in the temperature control region 2a. In the temperature control region 2A, temperature control means (not shown), such as heating and/or cooling means may be provided to control the temperature of the receiving medium 2. Optionally, the temperature control means may be integrated in the supporting means for supporting an image receiving medium 2. The temperature control means may be electrical temperature control means. The temperature control means may use a cooling and/or heating liquid to control the temperature of the image receiving medium 2. The temperature control means may further comprise a sensor (not shown) for monitoring the temperature of the image receiving medium 2.

A scanning print carriage 5 carries the four print heads 4a - 4d and may be moved in reciprocation in the main scanning direction X parallel to the platen 1, such as to enable scanning of the image receiving medium 2 in the main scanning direction X. Only four print heads 4a - 4d are depicted for demonstrating the invention. In practice an arbitrary number of print heads may be employed. In any case, at least one print head 4a - 4d per color of marking material is placed on the scanning print carriage 5. For example, for a black-and-white printer, at least one print head 4a - 4d, usually containing black marking material is present. Alternatively, a black-and-white printer may comprise a white marking material, which is to be applied on a black image-receiving medium 2. For a full-color printer, containing multiple colors, at least one print head 4a - 4d for each of the colors, usually black, cyan, magenta and yellow is present. Often, in a full-color printer, black marking material is used more frequently in comparison to differently colored marking material. Therefore, more print heads 4a - 4d containing black marking material may be provided on the scanning print carriage 5 compared to print heads 4a - 4d containing marking material in any of the other colors. Alternatively, the print head 4a - 4d containing black marking material may be larger than any of the print heads 4a - 4d, containing a differently colored marking material.

The carriage 5 is guided by guiding means 6. These guiding means 6 may be a rod as depicted in Fig. 1A. Although only one rod 6 is depicted in Fig. 1A, a plurality of rods may be used to guide the carriage 5 carrying the print heads 4. The rod may be driven by suitable driving means (not shown). Alternatively, the carriage 5 may be guided by other guiding means, such as an arm being able to move the carriage 5. Another alternative is to move the image receiving material 2 in the main scanning direction X.

Each print head 4a - 4d comprises an orifice surface 9 having at least one orifice 8, in fluid communication with a pressure chamber containing fluid marking material provided in the print head 4a - 4d. On the orifice surface 9, a number of orifices 8 are arranged in a single linear array parallel to the sub-scanning direction Y, as is shown in Fig. 1B. Alternatively, the nozzles may be arranged in the main scanning direction X. Eight orifices 8 per print head 4a - 4d are depicted in Fig. 1B, however obviously in a practical embodiment several hundreds of orifices 8 may be provided per print head 4a - 4d, optionally arranged in multiple arrays.

As depicted in Fig. 1A, the respective print heads 4a - 4d are placed parallel to each other. The print heads 4a - 4d may be placed such that corresponding orifices 8 of the respective print heads 4a - 4d are positioned in-line in the main scanning direction X. This means that a line of image dots in the main scanning direction X may be formed by selectively activating up to four orifices 8, each of them being part of a different print head 4a - 4d. This parallel positioning of the print heads 4a - 4d with corresponding in-line placement of the orifices 8 is advantageous to increase productivity and/or improve print quality. Alternatively multiple print heads 4a - 4d may be placed on the print carriage adjacent to each other such that the orifices 8 of the respective print heads 4a - 4d are positioned in a staggered configuration instead of in-line. For instance, this may be done to increase the print resolution or to enlarge the effective print area, which may be addressed in a single scan in the main scanning direction X. The image dots are formed by ejecting droplets of marking material from the orifices 8.

The ink jet printing assembly 3 may further comprise curing means 11a, 11b. As shown in Fig. 1A, a scanning print carriage 12 carries the two curing means 11a, 11b and may be moved in reciprocation in the main scanning direction X parallel to the platen 1, such as to enable scanning of the image receiving medium 2 in the main scanning direction X. Alternatively, more than two curing means may be applied. It is also possible to apply page-wide curing means. If page-wide curing means are provided, then it may not be necessary to move the curing means in reciprocation in the main scanning direction X. The first curing means 11a may emit a first beam of UV radiation, the first beam having a first intensity. The first curing means 11a may be configured to provide the radiation for the pre-curing step. The second curing means 11b may emit a second beam of radiation, the second beam of radiation having a second intensity. The second curing means 11b may be configured to provide the radiation for the post-curing step.

The carriage 12 is guided by guiding means 7. These guiding means 7 may be a rod as depicted in Fig. 1A. Although only one rod 7 is depicted in Fig. 1A, a plurality of rods may be used to guide the carriage 12 carrying the print heads 11. The rod 7 may be driven by suitable driving means (not shown). Alternatively, the carriage 12 may be guided by other guiding means, such as an arm being able to move the carriage 12. The curing means may be energy sources, such as actinic radiation sources, accelerated particle sources or heaters. Examples of actinic radiation sources are UV radiation sources or visible light sources. UV radiation sources are preferred, because they are particularly suited to cure UV curable inks by inducing a polymerization reaction in such inks. Examples of suitable sources of such radiation are lamps, such as mercury lamps, xenon lamps, carbon arc lamps, tungsten filaments lamps, light emitting diodes (LED's) and lasers. In the embodiment shown in Fig. 1A, the first curing means 11a and the second curing means 11b are positioned parallel to one another in the sub scanning direction Y. The first curing means 11a and the second curing means 11b may be the same type of energy source or may be different type of energy source. For example, when the first and second curing means 11a, 11b, respectively both emit actinic radiation, the wavelength of the radiated emitted by the two respective curing means 11a, 11b may differ or may be the same. The first and second curing means are depicted as distinct devices. However, alternatively, only one source of UV radiation emitting a spectrum of radiation may be used, together with at least two distinct filters. Each filter may absorb a part of the spectrum, thereby providing two beams of radiation, each one having intensity different from the other.

The flat surface 1, the temperature control means, the carriage 5, the print heads 4a - 4d, the carriage 12 and the first and second curing means 11a, 11b are controlled by suitable controlling means 10.

### Experiments and examples

### Materials

SR 306 (a difunctional tripropylene glycol diacrylate), SR 307 (a difunctional polybutadiene diacrylate), SR355 (a tetrafunctional acrylate) and SR 351 (a trifunctional acrylate) were obtained from Sartomer. Pentaerythritoltetrastearate was obtained from NOF as WE-6. Irgacure 819 was obtained from BASF. Docosanol was obtained from Merck. All chemicals were used as received.

### Methods

### Gloss

The gloss of an image was measured after the ink-layer was cured. The gloss was measured using a micro-TRI glossmeter obtained from BYK-Gardner GmbH using the internal calibration and measurement method. The micro-TRI gloss measuring device simultaneously measures the gloss under an angle of 20°, 60° and 85°, respectively. The gloss level reported is the gloss level measured under an angle of 85°.

### Comparison Experiment

### Rodcoating

Rodcoats were made by applying a 12 µm thick layer of ink onto a receiving medium. As receiving medium, Avery Dennison MPI2000 was used. MPI2000 is a self-adhesive vinyl medium.

The ink was cured by irradiating the ink layer using a Phoseon Fire Power FP300 LED lamp, having a window size of 150 x 20 mm and emitting radiation having a wavelength of 395 nm. The peak irradiance at 395 nm was 16 Wcm⁻². The lamp was operated at 100% power. The rodcoats were transported under the lamp 1 time at a speed of 15 m/min.

### Example and Comparative Examples

Several ink compositions were prepared. The ink compositions were prepared by adding gelling agent to a radiation curable medium. A first set of inks was prepared by providing 40.0 g of SR 306, 30 g of SR 307 and 30 g of SR 351 as radiation-curable monomers, 2.5 g Irgacure 819 as a photo-initiator, 5.0 gr of gelling agent and mixing the components. The composition of the gelling agent was varied as shown in table 1. Ink compositions **Ex 1** and **Ex 2** are ink compositions according to the present invention and comprise docosanol and pentaerythritoltetrastearate.

Comparative ink compositions **CE 1** and **CE 2** were prepared analogously; ink composition **CE 1** comprises docosanol as a gelling agent, but does not comprise pentaerythritoltetrastearate, and is not an ink composition according to the present invention. Ink composition **CE 2** comprises pentaerythritoltetrastearate as a gelling agent, but does not comprise docosanol, and is not an ink composition according to the present invention.

The ink compositions **Ex 1, Ex 2, CE 1** and **CE 2** are summarized in table 1.

**Table 1: Ink compositions**

| Ink compositions | radiation curable medium (gr) | docosanol (gr) | pentaerythritoltetrastearate (gr) |
|---|---|---|---|
| **Ex 1** | 95 | 2.5 | 2.5 |
| **Ex 2** | 95 | 1.5 | 3.5 |
| **CE 1** | 95 | 5.0 | 0 |
| **CE 2** | 95 | 0 | 5.0 |

A second set of ink compositions was prepared by providing 92.5 g of SR 355 as radiation-curable monomer, 2.5 g Irgacure 819 as a photo-initiator, 5.0 gr of gelling agent and mixing the components. The composition of the gelling agent was varied as shown in table 2. Ink compositions **Ex 3** and **Ex 4** are ink compositions according to the present invention and comprise docosanol and pentaerythritoltetrastearate. Comparative ink compositions **CE 3** and **CE 4** were prepared analogously. Ink composition **CE 3** comprises docosanol as a gelling agent, but does not comprise pentaerythritoltetrastearate, ink composition **CE 4** comprises pentaerythritoltetrastearate as a gelling agent, but does not comprise docosanol. Ink compositions **CE 3** and **CE 4** are not ink compositions according to the present invention.

**Table 2: Ink compositions**

| Ink compositions | radiation curable medium (gr) | docosanol (gr) | pentaerythritoltetrastearate (gr) |
|---|---|---|---|
| **Ex 3** | 95 | 2.5 | 2.5 |
| **Ex 4** | 95 | 1.5 | 3.5 |
| **CE 3** | 95 | 5.0 | 0 |
| **CE 4** | 95 | 0 | 5.0 |

Rodcoats were made using ink compositions **Ex 1, Ex 2, CE 1** and **CE 2.** The gloss of the rodcoats provided with the (cured) ink compositions was measured. The results are summarized in table 3.

**Table 3: Gloss levels**

| Ink compositions | Gloss 85° |
|---|---|
| **Ex 1** | 73 |
| **Ex 2** | 75 |
| **CE 1** | 50 |
| **CE 2** | 68 |

When comparing the gloss levels of a rod coat made using **Ex 1** and **Ex 2** to a rod coat made using **CE 1** or **CE 2,** it is observed that the rod coats made using ink compositions **Ex 1** and **Ex 2** show a higher gloss level than the rod coat made using ink composition **CE 1** and **CE 2.**

Rodcoats were made using ink compositions **Ex 3, Ex 4, CE 3** and **CE 4.** The gloss of the rodcoats provided with the (cured) ink compositions was measured. The results are summarized in table 4.

**Table 4: Gloss levels**

| Ink compositions | Gloss 85° |
|---|---|
| **Ex 3** | 93 |
| **Ex 4** | 93 |
| **CE 3** | 84 |
| **CE 4** | 86 |

When comparing the gloss levels of a rod coat made using **Ex 3** and **Ex 4** to a rod coat made using **CE 3** or **CE 4,** it is observed that the rod coats made using ink compositions **Ex 3** and **Ex 4** show a higher gloss level than the rod coat made using ink composition **CE 3** and **CE 4.**

Thus, the ink composition according to the present invention can form images having an increased gloss level compared to the ink compositions not according to the present invention. Hence, using ink compositions according to the present invention, high gloss levels can be obtained.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually and appropriately detailed structure. In particular, features presented and described in separate dependent claims may be applied in combination and any combination of such claims are herewith disclosed. Further, the terms and phrases used herein are not intended to be limiting; but rather, to provide an understandable description of the invention. The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language). The term coupled, as used herein, is defined as connected, although not necessarily directly.

## Claims

1. Radiation-curable inkjet ink composition comprising a gellant, wherein the gellant comprises:
• a fatty acid ester; the fatty acid ester being an ester obtainable by a condensation reaction between a fatty acid ester and a component selected from the group consisting of pentaerythritol, cyclodextrine, dipentaerythritol, 2-(hydroxymethyl)-2-methylpropane-1,3-diol, 2-ethyl-2-(hydroxymethyl)propane-1,3-diol, 2-(hydroxymethyl)propane-1,3-diol, trimethylolethane, trimethylolpropane, trimethylolbutane and trimethylolpentane; and
• a fatty acid and/or a fatty alcohol.

2. Radiation-curable inkjet ink composition according to claim 1, wherein the gellant is present in an amount of 0.2 wt% - 6.0 wt% based on the total weight of the radiation-curable inkjet ink composition.

3. Radiation-curable inkjet ink composition according to any of the preceding claims, wherein the ester compound is a fatty acid ester of pentaerythritol.

4. Radiation-curable inkjet ink composition according to claim 3, wherein the ester compound is pentaerythritoltetrastearate.

5. Radiation-curable inkjet ink composition according to any of the preceding claims, wherein the fatty acid and/or fatty alcohol comprise an alkyl group having 5-30 carbon atoms.

6. Radiation-curable inkjet ink composition according to any of the preceding claims, wherein the ink composition comprises an acrylate having two or more acrylate functional groups.

7. Radiation-curable inkjet ink composition according to claim 6, wherein the ink composition further comprises a monofunctional acrylate.

8. Ink set comprising a radiation-curable inkjet ink composition according to claim 1 - 7.

9. Use of
**i.** a fatty acid ester, the fatty acid ester being an ester obtainable by a condensation reaction between a fatty acid ester and a component selected from the group consisting of pentaerythritol, cyclodextrine, dipentaerythritol, 2-(hydroxymethyl)-2-methylpropane-1,3-diol, 2-ethyl-2-(hydroxymethyl)propane-1,3-diol, 2-(hydroxymethyl)propane-1,3-diol, trimethylolethane, trimethylolpropane, trimethylolbutane and trimethylolpentane; and
**ii.** a fatty acid and/or a fatty alcohol
in a radiation-curable inkjet ink composition.

10. Method for preparing a radiation-curable inkjet ink composition according to claim 1 - 7, the method comprising the steps of:
• providing a radiation curable component;
• providing gellant, wherein the gellant comprises
**i.** a fatty acid ester, the fatty acid ester being an ester obtainable by a condensation reaction between a fatty acid ester and a component selected from the group consisting of pentaerythritol, cyclodextrine, dipentaerythritol, 2-(hydroxymethyl)-2-methylpropane-1,3-diol, 2-ethyl-2-(hydroxymethyl)propane-1,3-diol, 2-(hydroxymethyl)propane-1,3-diol, trimethylolethane, trimethylolpropane, trimethylolbutane and trimethylolpentane; and
**ii.** a fatty acid and/or a fatty alcohol; and
• mixing the radiation curable component and the gellant.

11. Method for applying an image onto a recording medium, the method comprising the steps of :
• jetting droplets of a radiation-curable inkjet ink composition according to any of claims 1-7 onto the recording medium;
• curing the radiation-curable inkjet ink composition by irradiating the ink composition using UV radiation.

## Patentansprüche

1. Strahlungshärtbare Tintenstrahltintenzusammensetzung mit einem Geliermittel, wobei das Geliermittel enthält:
- einen Fettsäureester; wobei der Fettsäureester ein Ester ist, der erhältlich ist durch eine Kondensationsreaktion zwischen einem Fettsäureester und einer Komponente, die ausgewählt ist aus der Gruppe bestehend aus Pentaerythritol, Zyklodextrin, Dipentaerythritol, 2-(Hydroxymethyl)-2-Methylpropan-1,3-Diol, 2-Ethyl-2-(Hydroxymethyl)Propan-1,3-Diol, 2-(Hydroxymethyl)Propan-1,3-Diol, Trimethylethan, Trimethylpropan, Trimethylbutan und Trimethylpentan; und
- eine Fettsäure und/oder einen Fettalkohol.

2. Strahlungshärtbare Tintenstrahltintenzusammensetzung nach Anspruch 1, bei der das Geliermittel in einer Menge von 0,2 Gew% bis 6,0 Gew% auf der Basis des Gesamtgewichts der strahlungshärtbaren Tintenstrahltintenzusammensetzung vorhanden ist.

3. Strahlungshärtbare Tintenstrahltintenzusammensetzung nach einem der vorstehenden Ansprüche, bei der die Esterverbindung ein Fettsäureester von Pentaerythritol ist.

4. Strahlungshärtbare Tintenstrahltintenzusammensetzung nach Anspruch 3, bei der die Esterverbindung Pentaerythritolstearat ist.

5. Strahlungshärtbare Tintenstrahltintenzusammensetzung nach einem der vorstehenden Ansprüche, bei der die Fettsäure und/oder der Fettalkohol eine Alkylgruppe mit 5 bis 30 Kohlenstoffatomen enthält.

6. Strahlungshärtbare Tintenstrahltintenzusammensetzung nach einem der vorstehenden Ansprüche, bei der die Tintenzusammensetzung ein Acrylat enthält, das zwei oder mehr Acrylat-Funktionsgruppen aufweist.

7. Strahlungshärtbare Tintenstrahltintenzusammensetzung nach Anspruch 6, bei der die Tintenzusammensetzung weiterhin ein monofunktionales Acrylat enthält.

8. Tintenzusammenstellung mit einer strahlungshärtbaren Tintenstrahltintenzusammensetzung nach Anspruch 1 bis 7.

9. Verwendung von
i. einem Fettsäureester, wobei der Fettsäureester ein Ester ist, der erhältlich ist durch eine Kondensationsreaktion zwischen einem Fettsäureester und einer Komponente, die ausgewählt aus der Gruppe bestehend aus Pentaerythritol, Zyklodextrin, Dipentaerythritol, 2-(Hydroxymethyl)-2-Methylpropan-1,3-Diol, 2-Ethyl-2-(Hydroxymethyl)Propan-1,3-Diol, 2-(Hydroxymethal)Propan-1,3-Diol, Trimethylethan, Trimethylpropan, Trimethylbutan und Trimethylpentan; und
ii. einer Fettsäure und/oder eines Fettalkohols
in einer strahlungshärtbaren Tintenstrahltintenzusammensetzung.

10. Verfahren zur Zubereitung einer strahlungshärtbaren Tintenstrahltintenzusammensetzung nach Anspruch 1 bis 7, wobei das Verfahren die folgenden Schritte umfasst:
- bereitstellen einer strahlungshärtbaren Komponente;
- bereitstellen eines Geliermittels, wobei das Geliermittel aufweist:
i. einen Fettsäureester; wobei der Fettsäureester ein Ester ist, der erhältlich ist durch eine Kondensationsreaktion zwischen einem Fettsäureester und einer Komponente, die ausgewählt aus der Gruppe bestehend aus Pentaerythritol, Zyklodextrin, Dipentaerythritol, 2-(Hydroxymethyl)-2-Methylpropan-1,3-Diol, 2-Ethyl-2-(Hydroxymethyl)Propan-1,3-Diol, 2-(Hydroxymethal)Propan-1,3-Diol, Trimethylethan, Trimethylpropan, Trimethylbutan und Trimethylpentan; und
ii. eine Fettsäure und/oder einen Fettalkohol; und
- mischen der strahlungshärtbaren Komponente und des Geliermittels.

11. Verfahren zum Aufbringen eines Bildes auf ein Aufzeichnungsmedium, welches Verfahren die folgenden Schritte umfasst:
- ausstoßen von Tröpfchen einer strahlungshärtbaren Tintenstrahltintenzusammensetzung nach einem der Ansprüche 1 bis 7 auf ein Aufzeichnungsmedium;
- aushärten lassen der strahlungshärtbaren Tintenstrahltintenzusammensetzung durch Bestrahlen der Tintenzusammensetzung mit UV-Strahlung.

## Revendications

1. Composition d'encre pour jet d'encre durcissable sous rayonnement comprenant un gélifiant, dans laquelle le gélifiant comprend :
• un ester d'acide gras ; l'ester d'acide gras étant un ester pouvant être obtenu par une réaction de condensation entre un ester d'acide gras et un composant sélectionné dans le groupe consistant en le pentaérythritol, une cyclodextrine, le dipentaérythritol, le 2-(hydroxyméthyl)-2-méthylpropane-1,3-diol, le 2-éthyl-2-(hydroxyméthyl)propane-1,3-diol, le 2-(hydroxyméthyl)propane-1,3-diol, le triméthyloléthane, le triméthylolpropane, le triméthylolbutane et le triméthylolpentane ; et
• un acide gras et/ou un alcool gras.

2. Composition d'encre pour jet d'encre durcissable sous rayonnement selon la revendication 1, dans laquelle le gélifiant est présent en une quantité de 0,2 % en poids - 6,0 % en poids sur la base du poids total de la composition d'encre pour jet d'encre durcissable sous rayonnement.

3. Composition d'encre pour jet d'encre durcissable sous rayonnement selon l'une quelconque des revendications précédentes, dans laquelle le composé d'ester est un ester d'acide gras de pentaérythritol.

4. Composition d'encre pour jet d'encre durcissable sous rayonnement selon la revendication 3, dans laquelle le composé d'ester est le tétrastéarate de pentaérythritol.

5. Composition d'encre pour jet d'encre durcissable sous rayonnement selon l'une quelconque des revendications précédentes, dans laquelle l'acide gras et/ou l'alcool gras comprennent un groupe alkyle présentant 5-30 atomes de carbone.

6. Composition d'encre pour jet d'encre durcissable sous rayonnement selon l'une quelconque des revendications précédentes, dans laquelle la composition d'encre comprend un acrylate présentant deux groupes fonctionnel acrylate ou plus.

7. Composition d'encre pour jet d'encre durcissable sous rayonnement selon la revendication 6, dans laquelle la composition d'encre comprend en outre un acrylate monofonctionnel.

8. Assortiment d'encres comprenant une composition d'encre pour jet d'encre durcissable sous rayonnement selon les revendications 1-7.

9. Utilisation
i. d'un ester d'acide gras, l'ester d'acide gras étant un ester pouvant être obtenu par une réaction de condensation entre un ester d'acide gras et un composant sélectionné dans le groupe consistant en le pentaérythritol, une cyclodextrine, le dipentaérythritol, le 2-(hydroxyméthyl)-2-méthylpropane-l,3-diol, le 2-éthyl-2-(hydroxyméthyl)propane-1,3-diol, le 2-(hydroxyméthyl)propane-1,3-diol, le triméthyloléthane, le triméthylolpropane, le triméthylolbutane et le triméthylolpentane ; et
ii. d'un acide gras et/ou d'un alcool gras dans une composition d'encre pour jet d'encre durcissable sous rayonnement.

10. Procédé de préparation d'une composition d'encre pour jet d'encre durcissable sous rayonnement selon les revendications 1-7, le procédé comprenant les étapes consistant à :
• fournir un composant durcissable sous rayonnement ;
• fournir un gélifiant, dans lequel le gélifiant comprend
i. un ester d'acide gras, l'ester d'acide gras étant un ester pouvant être obtenu par une réaction de condensation entre un ester d'acide gras et un composant sélectionné dans le groupe consistant en le pentaérythritol, une cyclodextrine, le dipentaérythritol, le 2-(hydroxyméthyl)-2-méthylpropane-l,3-diol, le 2-éthyl-2-(hydroxyméthyl)propane-1,3-diol, le 2-(hydroxyméthyl)propane-1,3-diol, le triméthyloléthane, le triméthylolpropane, le triméthylolbutane et le triméthylolpentane ; et
ii. un acide gras et/ou un alcool gras ; et
• mélanger le composant durcissable sous rayonnement et le gélifiant.

11. Procédé d'application d'une image sur un support d'enregistrement, le procédé comprenant les étapes consistant à :
• projeter des gouttelettes d'une composition d'encre pour jet d'encre durcissable sous rayonnement selon l'une quelconque des revendications 1-7 sur le support d'enregistrement ;
• durcir la composition d'encre pour jet d'encre durcissable sous rayonnement en irradiant la composition d'encre au moyen d'un rayonnement UV.
